# EUROPEAN PATENT SPECIFICATION

(11) **EP 3 626 676 B1**
(45) Date of publication and mention of the grant of the patent: **08.12.2021**
(21) Application number: 19198149.7
(22) Date of filing: 18.09.2019
(51) Int. Cl.: B66F 9/075, B66F 9/22, B62D 7/15

(54) **LIFTING TRUCK PROVIDED WITH A HYDRAULIC SYSTEM FOR SWITCHING BETWEEN A FORWARD AND SIDEWAYS DRIVING DIRECTION, AND A METHOD FOR LOADING AND/OR UNLOADING A CARGO SPACE**
HUBWAGEN MIT EINEM HYDRAULIKSYSTEM ZUM WECHSELN DER VORWÄRTS- UND SEITLICHEN FAHRRICHTUNG SOWIE EINEM VERFAHREN ZUM BELADEN UND/ODER ENTLADEN EINES LADERAUMES
CHARIOT ÉLÉVATEUR ÉQUIPÉ D'UN SYSTÈME HYDRAULIQUE POUR COMMUTER ENTRE UNE DIRECTION DE CONDUITE AVANT ET LATÉRALE, ET PROCÉDÉ DE CHARGEMENT ET/OU DE DÉCHARGEMENT D'UN ESPACE DE CHARGEMENT

(30) Priority: 18.09.2018 NL 2021662
(43) Date of publication of application: 25.03.2020
(73) Proprietor: Terberg Kinglifter B.V., 3403 NL IJsselstein (NL)
(72) Inventor: de Jong, Marcel, 3403 NL IJSSELSTEIN (NL)
(74) Representative: Verdijck, Gerardus

(56) References cited:
- WO-A1-01/12493
- WO-A1-2008/137704
- US-A1- 2002 100 643
- US-A1- 2007 251 746

## Description

The present invention relates to a truck-mounted forklift truck. Such a truck-mounted forklift is usually used in combination with a truck for thereby loading and/or unloading the cargo space of such a truck.

WO 2008/137704 A1 relates to a four-way forklift with outwardly pivoting wheel arms. WO 2008/137704 A1 discloses a truck-mounted forklift truck according to the preamble of the independent claim 1.

Truck-mounted forklifts are known in practice which are brought along by a truck in order to enable independent loading and/or unloading. Such a truck-mounted forklift is usually provided here with mounting elements whereby the truck-mounted forklift can be mounted on the cargo space, particularly on a truck, and can be brought along by such a truck. The forks of the truck-mounted forklift serve to pick up and/or set down the cargo.

Truck-mounted forklift trucks are usually used in practice for picking up a cargo with the forks and carrying it to the desired position through forward and rearward movements of the truck-mounted forklift. This can be difficult and entail an additional risk of the cargo falling off, particularly in the case of elongate cargo. For this purpose it is possible to place the wheels of the truck-mounted forklift in a transverse direction so that the truck-mounted forklift is displaceable in a substantially lateral direction. Elongate cargo in particular can hereby be transported more safely. A problem is that many operations are required here, so that an alteration or conversion of the truck-mounted forklift is provided which is not very user-friendly.

The present invention has for its object to provide a truck-mounted forklift truck whereby the above stated problems are obviated or at least reduced, such that the loading and/or unloading of a cargo space using a truck-mounted forklift can be performed more efficiently.

This object is achieved with a truck-mounted forklift truck for loading and/or unloading a cargo space according to claim 1.

The truck-mounted forklift truck can be connected to a truck with cargo space or loading space in simple manner by providing a frame with mounting elements. In this manner a truck-mounted forklift can be brought along during transport and is thereby immediately available for loading and/or unloading using the forks of the truck-mounted forklift. Use need therefore not be made of a forklift truck at the location in question. The truck-mounted forklift is preferably provided here with a mast and associated drive in order to thereby further increase the utility of the truck-mounted forklift. Using the wheels and associated drive the truck-mounted forklift can be displaced over a ground surface, particularly during loading and/or unloading of a truck.

The truck-mounted forklift is provided with a steering mechanism with which at least some of the wheels are steerable. It is hereby possible to manoeuvre the truck-mounted forklift in effective manner when displacing cargo. Such a steering mechanism can take diverse forms, for instance with a gear rack construction or with a steering/turning cylinder. By providing extendable arms the truck-mounted forklift can take a compact form relative to the overhang length. This has the advantage that the space necessary on the rear side of the truck during transport can remain limited. This prevents loading space being lost hereby.

The hydraulic system enables steering of the wheels. According to the invention, a hydraulic system is here provided with an orientation mechanism for switching between a forward state and a lateral state. The forward state relates to the normal direction of travel of the truck-mounted forklift, while the lateral state relates to the truck-mounted forklift moving in lateral direction, particularly when elongate cargo must be transported. Additional load carriers are optionally applied here in order to increase the stability during the lateral movement.

By combining the orientation mechanism with the conventional hydraulic system for steering of the wheels a compact and effective hydraulic system is obtained, whereby the functionality of changing the wheel orientation can be realized in effective manner. The user need for this purpose only control the hydraulic system, and, to change the orientation of the wheels, particularly the orientation mechanism thereof. The hydraulic system can hereby provide a great functionality with a limited number of components. Hereby, a cost-effective hydraulic system can therefore be obtained which is relatively robust and wherein the amount of maintenance can remain limited as compared to conventional systems.

The hydraulic system is preferably provided with a switch for activating the control of the front wheels and/or rear wheel or wheels. By providing a switch the orientation of respectively the front wheels and rear wheel or rear wheels can be performed in succession. This further limits the necessary number of components in the hydraulic system. This results in a more cost-effective hydraulic system, wherein the risk of malfunctions is additionally also minimized.

According to the invention the hydraulic system further comprises a correction system for aligning the front wheels and/or the at least one rear wheel.

By providing a correction system the position of wheels, particularly the front wheels, can be corrected in effective manner. In practice leakage and/or resistances and/or other disturbances will cause for instance the front wheels of the truck-mounted forklift to start running non-parallel to some extent. This makes it more difficult for a user to steer the truck-mounted forklift. Providing a correction system achieves that the position can be corrected regularly during use without a user, or another person such as a mechanic, having to perform additional work here. In a currently preferred embodiment the driver of the truck-mounted forklift can carry this out automatically or at least semi-automatically from the cab. A user-friendly correction of the position of the front wheels in particular is for this purpose possible during use of the truck-mounted forklift. This results in a user-friendly truck-mounted forklift. A longer operating time of the truck-mounted forklift is further provided by the ability to calibrate or correct the position of the wheels during use. This increase the utility of the truck-mounted forklift according to the invention.

The correction system is provided with a wheel stop for the wheels to be corrected. During the correcting, a wheel is hereby steered against the stop so that the position is thereby redefined.

The correction system further preferably comprises a correction pressure-relief valve. Especially in combination with providing a stop, a wheel can as it were be pressed against the stop and the wheel which may be lagging behind can be additionally turned until it is also in this desired position against a stop. A correction/calibration can hereby be performed in effective manner.

In a further advantageous embodiment according to the invention the truck-mounted forklift truck further comprises a steering mechanism configured to steer at least one of the wheels of the truck-mounted forklift, wherein the steering mechanism is provided with:
- a steering cylinder configured to turn the steered wheel in a desired direction for the purpose of steering the truck-mounted forklift in the desired direction; and
- a wheel suspension configured to rotate the steered wheel through a steering angle about a substantially vertical axis in co-action with the steering cylinder,
wherein the steering cylinder comprises a turning cylinder.

At least the rear wheel of the truck-mounted forklift is preferably provided as steered wheel with said turning cylinder, preferably a hydraulic turning cylinder.

According to this embodiment of the invention, the steering mechanism is provided with a steering cylinder which is configured to turn the steered wheel in the desired direction, and thereby to steer the truck-mounted forklift truck in the desired direction. The orientation of the steered wheel can be adjusted to the desired direction of travel in effective manner by means of the orientation mechanism. Making use in this embodiment of a steering cylinder embodied as turning cylinder as alternative to a conventional steering mechanism, wherein use is made of arms and cylinders in such a conventional mechanism, provides an effective steering of the steerable wheel. In this way an action of the cylinder can be translated directly into a turn of the steerable wheel in the desired direction. In this way the conventional conversion of a translating movement of a cylinder to a rotation movement of the steerable wheel is avoided, and according to the invention the steerable wheel is controlled directly with a rotation of the turning cylinder.

Application of the turning cylinder reduces limitations of a conventional steering mechanism relative to the size of the steering angle.

In addition, the construction of the steering mechanism in the truck-mounted forklift truck according to the invention can be further simplified. From a viewpoint of cost, this has a favourable effect on the construction of the truck-mounted forklift and has the additional advantage that the steering mechanism takes up less space. The truck-mounted forklift can thereby take a more compact form, whereby manoeuvring with the truck-mounted forklift is for instance improved still further. The wheel suspension of the truck-mounted forklift truck according to the invention is here preferably adapted to the steering cylinder of the steering mechanism, such that the steered wheel is rotatable through the steering angle over said substantially vertical axis.

The steering mechanism of the truck-mounted forklift truck according to the invention preferably enables a rotation through the steering angle of at least 160°, preferably at least 170°. In a currently preferred embodiment of the truck-mounted forklift the steering angle is preferably about 180°. This means that the steerable wheel can be turned through 180°. This provides a maximum flexibility for the manoeuvring of the truck-mounted forklift truck according to the invention.

In an advantageous embodiment according to the invention the turning cylinder is provided with a rotation axis corresponding substantially to the vertical axis about which the steered wheel can rotate.

Providing the turning cylinder with a rotation axis and having this axis correspond, i.e. substantially coincide, with the substantially vertical axis over which the steered wheel is rotatable in use enables a direct steering of the wheel without transmission and/or arms being required. This enables a compact construction. Also provided hereby is a very small turning circle, which further improves the manoeuvring with the truck-mounted forklift truck in this embodiment according to the invention in a small space. This reduces the risk of damage to the truck-mounted forklift and/or goods or other objects or persons in the vicinity.

In a further advantageous embodiment the truck-mounted forklift truck further comprises one or more load carriers configured to carry cargo during displacement of the truck-mounted forklift in a lateral direction, and provided with a tilting mechanism for moving the load carrier downward and an unfolding mechanism for simultaneously unfolding a support.

Providing a tilting mechanism and an unfolding mechanism also enables a support to be unfolded during lowering of the load carrier from a folded-up position. This has the advantage that the overhang length remains limited. This makes transport with the truck-mounted forklift according to the invention more effective.

The invention also relates to a truck comprising a cargo space and a truck-mounted forklift truck as described above, wherein the truck is provided with coupling elements configured to be able to couple the truck-mounted forklift to the truck in co-action with the mounting elements of the truck-mounted forklift.

Such a truck provides the same effects and advantages as stated for the truck-mounted forklift.

The invention further also relates to a method for loading and/or unloading a cargo space of a truck, comprising the steps of:
- uncoupling the truck-mounted forklift truck from the truck;
- extending the wheel arms;
- loading and/or unloading the truck with the truck-mounted forklift truck; and
- retracting the wheel arms and coupling the truck-mounted forklift truck to the truck.

Such a method provides the same effects and advantages as stated for the truck-mounted forklift truck and/or the truck.

The method preferably comprises of switching the wheel orientation with the orientation mechanism. In this way the orientation of the wheels can be adjusted in user-friendly manner, such that the truck-mounted forklift can be used in a normal forward direction of travel or in a special lateral direction of travel, for instance for elongate cargo.

Additionally or alternatively, the method further comprises of correcting the wheel position of one or more of the wheels of the truck-mounted forklift with the correction system. Providing the correction system achieves that the position of the wheels can be corrected or calibrated. It has been found in practice that the position of the wheels drifts to some extent, for instance due to leakage or resistances. This is remedied in effective manner with the correction system.

The orientation mechanism and the correction system are preferably provided integrally in the hydraulic system of the truck-mounted forklift. This enables a user-friendly operation of the truck-mounted forklift, while a functionally effective truck-mounted forklift is obtained at the same time.

Further features, advantages and details of the invention are described on the basis of preferred embodiments thereof, wherein reference is made to the accompanying drawings, in which:
- figure 1 shows a view of a truck-mounted forklift truck in a forward orientation in an embodiment according to the invention;
- figure 2 shows a top view of the truck-mounted forklift of figure 1 with wheels in forward and lateral orientation;
- figure 3 shows a hydraulic diagram for application in the truck-mounted forklift of figures 1 and 2; and
- figures 4 and 5 show views of a load carrier in an embodiment of the truck-mounted forklift according to the invention.

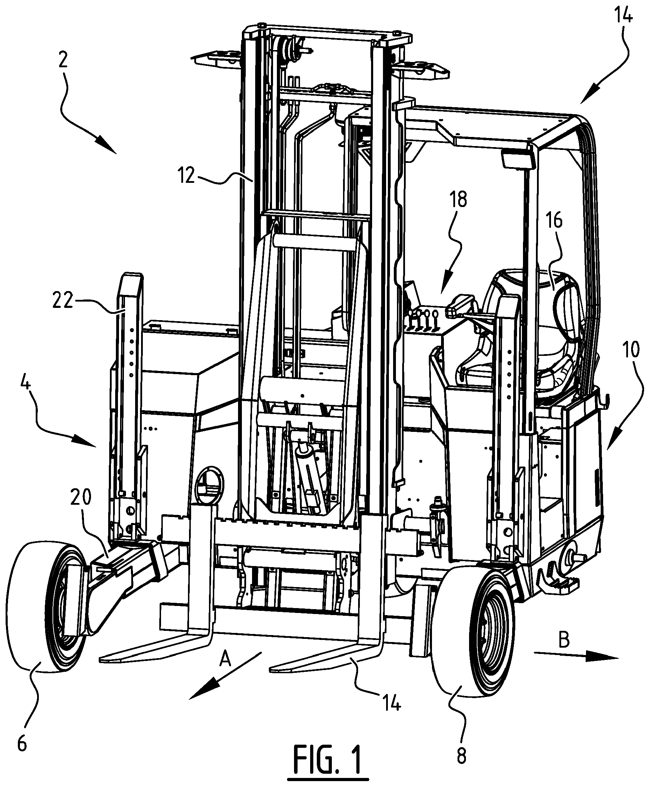

Truck-mounted forklift truck 2 (figure 1) is provided with frame 4, wherein front wheel 6 and second front wheel 8 are arranged on the front side. Steered wheel 10 is provided on the rear side. In a first embodiment front wheels 6, 8 are provided fixedly and in a second embodiment also provided steerably.

In the shown embodiment truck-mounted forklift truck 2 is provided with mast construction 12 with forks 14 for picking up and setting down cargo. In the shown embodiment truck-mounted forklift 2 is further provided with cab 14 with seat 16 and steering system 18.

In the shown embodiment (figure 1) wheels 6, 8 are provided on the front side of truck-mounted forklift 2, arranged on wheels arms 20. Two load carriers 22 are further arranged in the shown embodiments.

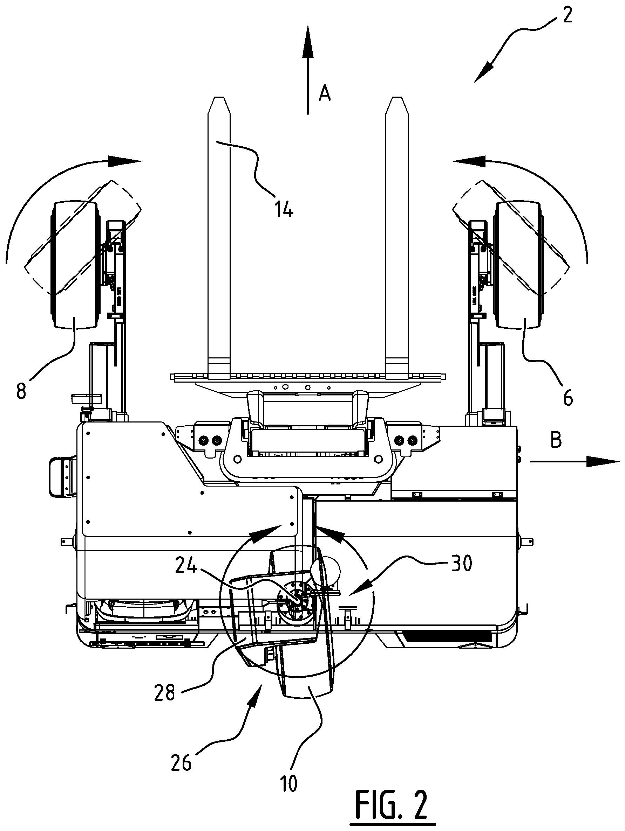

Using an orientation mechanism truck-mounted forklift 2 (figure 2) can be moved from a forward state for movement in the normal direction of travel A (wheels 6, 8 shown with full lines in figure 2) and a situation in which wheels 6, 8, 10, i.e. front wheels 6, 8 and rear wheel 10, rotate to a lateral state with lateral wheel orientation. In the transitional stage, shown somewhat schematically, between the two orientations (wheels shown with dotted lines in figure 2) right front wheel 6 rotates to the left when transitioning from forward state to lateral state, and left front wheel 8 rotates to the right. Rear wheel 10 is provided rotatably using hydraulic turning cylinder 24. In the shown embodiment turning cylinder 24 is provided with rotation axis 26 around which the preferably steered rear wheel 10 is rotatable. Suspension 28 of rear wheel 10 is connected to wheel axle 30. Truck-mounted forklift 2 can be manoeuvred by rotation of steered wheel 10 through a steering angle.

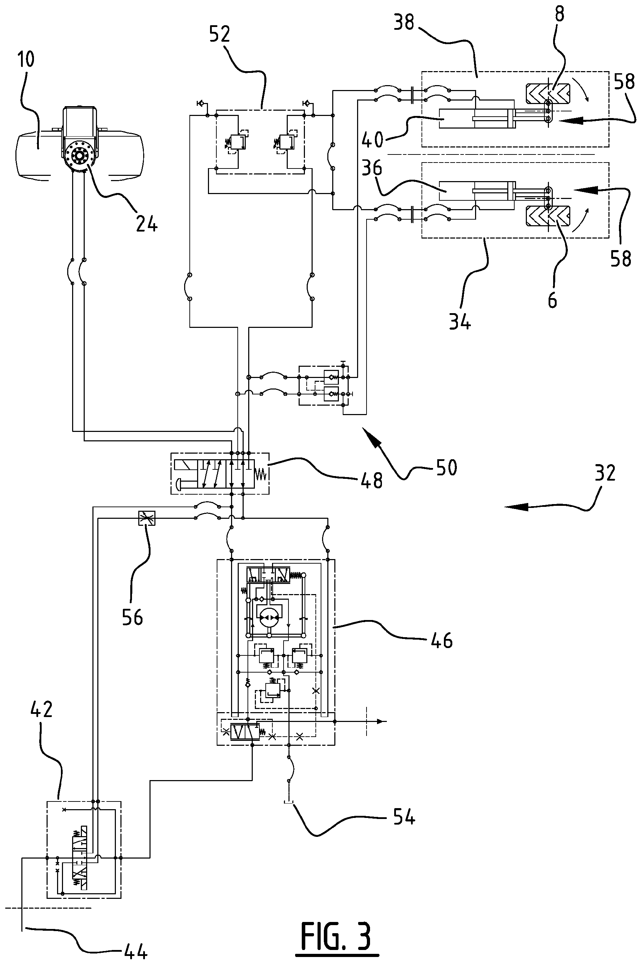

Hydraulic diagram 32 (figure 3) shows a hydraulic diagram for controlling truck-mounted forklift truck 2, in particular front wheels 6, 8 and rear wheel 10. Front-wheel drive system 34 here makes use of hydraulic cylinder 36 and left front-wheel drive system 38 makes use of hydraulic cylinder 40. In the shown embodiment steered rear wheel 10 is provided with hydraulic turning cylinder 24. Preferably provided is switch 42 with which the orientation of the wheels can be adjusted. In the normal situation of use switch 42 provides for the transfer of the hydraulics from hydraulic system/reservoir 44 to hydraulic steering system 46. Hydraulic system 46 provides for the normal steering during manoeuvring with truck-mounted forklift 2, particularly by controlling of turning cylinder 24. Switch 48 here enables the switching between rear wheel 10 and front wheels 6, 8. Pressure safeguard 50 is provided in order to keep front wheels 6, 8 under pressure. Correction system 52 is further incorporated integrally in hydraulic system 32. From normal steering system 46, hydraulic liquid can be fed back to tank 54. In the shown embodiment an adjustable restriction 56 is further provided, which is active in the adjustment of the orientation of wheels 6, 8, 10. Stops 58 which are used in the case that correction system 52 is utilized are further arranged schematically at front wheels 6, 8.

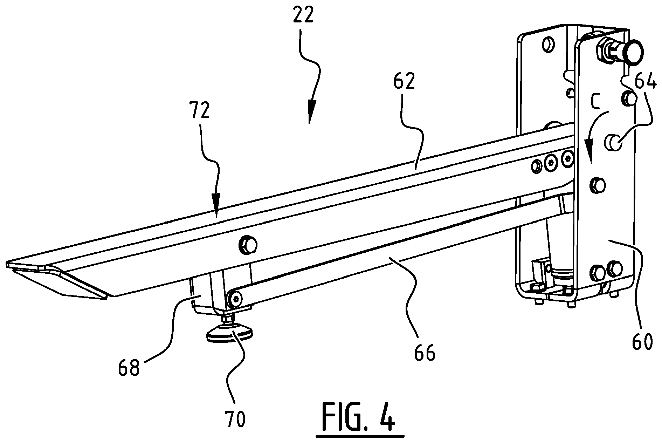

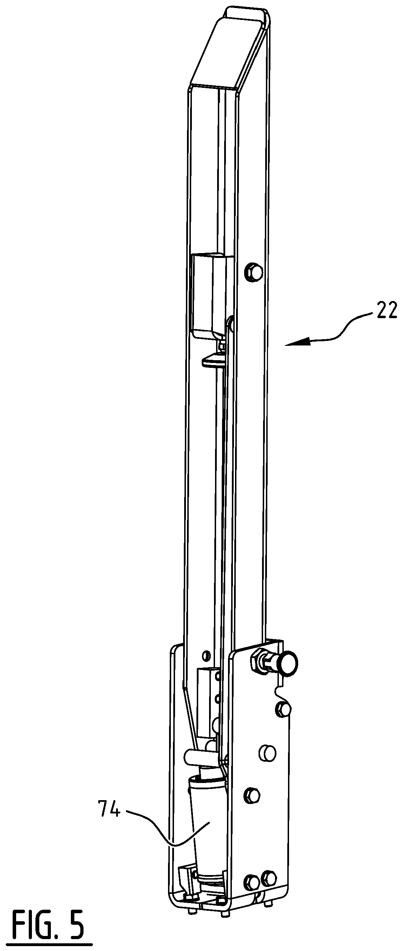

Load carriers 22 (figure 4, 5) carry the cargo particularly during the lateral displacement of goods. During such a lateral displacement wheels 6, 8, 10 of truck-mounted forklift 2 are in the shown embodiment placed completely laterally, whereby the truck-mounted forklift is displaceable in lateral direction B instead of in forward direction A. This is applied particularly in the case of elongate goods. In such a case load carriers 22 then contribute to a greater stability in that, in the case of two load carriers 22, they are arranged at a greater mutual distance than forks 14 of truck-mounted forklift 2. In the shown embodiment a load carrier 22 is secured to frame 4 of truck-mounted forklift 2 using support 60. Support 60 is thereby mounted fixedly on truck-mounted forklift 2. Carrier part 62 is rotatable around shaft 64. Using connecting rod 66 as unfolding mechanism, support 68 is folded down automatically when load carrier 22 is moved downward around rotation shaft 64 in rotation direction C. In the shown embodiment support 68 is provided with foot 70. By making use of the tilting and unfolding mechanism, wherein support 68 rotates around shaft 72, the necessary space for load carriers 22 in a folded-up state is limited. There is hereby no unnecessary adverse effect on the overhang length.

In the shown embodiment control of load carriers 22 takes place using cylinder 74. Automatic folding down and folding up of load carriers 22 is hereby simplified for a user. If desired, it is possible to perform such a movement manually.

During transport truck-mounted forklift 2 is usually connected to the rear side of a truck and/or mounted on or onto the loading floor thereof in a manner known in practice. This is usually possible without loss of cargo space or loading space of the relevant truck or trailer. The forks of mast construction 12 are herein for instance inserted into box beams of trucks. Optionally, support is found here on an additional frame and/or truck-mounted forklift 2 is fastened to the truck using chains.

When the desired location is reached, truck-mounted forklift 2 is uncoupled from the truck in known manner and then used to load and/or unload goods from the cargo space of the truck. During use a user steers truck-mounted forklift truck 2.

In a currently preferred embodiment of hydraulic diagram 32 wheels 6, 8, 10 on the front side and rear side of truck-mounted forklift 2 are placed in the desired lateral orientation separately. In this embodiment the following steps are here performed by the user:
- Engage the parking brake or other safety measure;
- Turn the (preferably spring-loaded) switch 42 to the left and hold it, whereby hydraulic system 32 turns rear wheel 10 to the right;
- Operate 4-way switch 48 on for instance a dashboard in the cab of truck-mounted forklift truck 2;
- Turn the (preferably spring-loaded) switch 42 to the right and hold it, whereby front wheels 6, 8 turn inward;
- Release switch 42 when front wheels 6, 8 are in the desired position.

In this currently preferred embodiment of hydraulic diagram 32 the wheels 6, 8, 10 are returned to the starting position in the forward orientation by performing the steps in reverse order:
- Engage the parking brake or other safety measure;
- Turn the (preferably spring-loaded) switch 42 to the left and hold it, whereby front wheels 6, 8 turn outward until they are positioned against stop 58;
- Switch off 4-way switch 48;
- Turn the (preferably spring-loaded) switch 42 to the right and hold it, whereby hydraulic system 32 turns rear wheel 10 to the left;
- Release switch 42 when rear wheel 10 is in the desired position.

In this currently preferred embodiment hydraulic diagram 32 is also provided with correction system 52. When used by a user, the following steps are performed to correct, i.e. calibrate, in particular the position of front wheels 6, 8:
- Turn the steering wheel completely to the left, front wheels 6, 8 rotate outward; and
- Hold the steering wheel turned to the left, so that front wheels 6, 8 remain pressed against stop 58, such that front wheels 6, 8 are positioned properly and a correction/calibration of the position of wheels 6, 8 is brought about.

The present invention is by no means limited to the above described preferred embodiments thereof. The rights sought are defined by the following claims, within the scope of which many modifications can be envisaged. It is thus for instance possible to manufacture parts of truck-mounted forklift 2 from plastic and/or metal. It is also possible to give truck-mounted forklift 2 a different lifting capacity, depending on the intended application.

It is further possible to provide mast construction 12 in other embodiments, for instance with a so-called scissor mast.

## Claims

1. Truck-mounted forklift truck (2) for loading and/or unloading a cargo space, the truck-mounted forklift truck (2) comprising:
- a frame (4) provided with mounting elements configured to mount the truck-mounted forklift (2) on a truck provided with the cargo space;
- a set of forks (14) for picking up and/or setting down a cargo during the loading and/or unloading;
- a number of front wheels (6, 8) arranged on the front side of the frame (4);
- at least one rear wheel (10) arranged on or close to the rear side of the frame (4);
- a steering mechanism (18) for steering at least some of the wheels (6, 8, 10), wherein the steering mechanism (18) comprises a hydraulic system (46),
wherein the hydraulic system (32) comprises an orientation mechanism for switching between a forward state with a forward wheel orientation for a forward direction of travel (A) and a lateral state with a lateral wheel orientation for a lateral direction of travel (B),
**characterised in that** the hydraulic system (32) further comprises a correction system (52) for aligning the front wheels (6, 8) and/or the at least one rear wheel (10),
wherein the correction system (52) comprises a wheel stop (58).

2. Truck-mounted forklift truck (2) according to claim 1, wherein the hydraulic system (32) comprises a switch for activating the control of wheel orientation of the front wheels (6, 8) and/or rear wheel or wheels (10).

3. Truck-mounted forklift (2) truck according to claim 1 or 2, wherein the correction system (52) comprises a correction pressure-relief valve.

4. Truck-mounted forklift truck (2) according to any one of the foregoing claims, further comprising a steering mechanism (18) configured to steer at least one of the wheels (6, 8, 10) of the truck-mounted forklift (2), wherein the steering mechanism (46) is provided with:
- a steering cylinder (24) configured to turn the steered wheel in a desired direction for the purpose of steering the truck-mounted forklift (2) in the desired direction; and
- a wheel suspension configured to rotate the steered wheel through a steering angle about a substantially vertical axis in co-action with the steering cylinder (24),
wherein the steering cylinder (24) comprises a turning cylinder.

5. Truck-mounted forklift truck (2) according to any one of the foregoing claims, further comprising one or more load carriers configured to carry cargo during displacement of the truck-mounted forklift (2) in a lateral direction (B), and provided with a tilting mechanism for moving the load carrier downward and an unfolding mechanism for simultaneously unfolding a support.

6. Truck comprising a cargo space and a truck-mounted forklift truck (2) according to any one of the foregoing claims, and further provided with coupling elements configured to couple the truck-mounted forklift (2) to the truck in co-action with the mounting elements of the truck-mounted forklift truck.

7. Method for loading and/or unloading a cargo space of a truck, comprising the steps of:
- providing a truck and truck-mounted forklift truck (2) according to any one of the foregoing claims;
- uncoupling the truck-mounted forklift truck (2) from the truck;
- loading and/or unloading the truck with the truck-mounted forklift truck (2); and
- coupling the truck-mounted forklift truck (2) to the truck.

8. Method according to claim 7, further comprising of switching the wheel orientation with the orientation mechanism.

9. Method according to claim 7 or 8, further comprising the step of correcting the wheel position of one or more of the wheels of the truck-mounted forklift truck (2) with the correction system (52).

## Patentansprüche

1. Auf einen LKW montierbarer Mitnahmegabelstapler (2) zum Be- und/oder Entladen eines Laderaums, wobei der Mitnahmegabelstapler (2) aufweist:
- einen Rahmen (4), der mit Befestigungselementen versehen ist, die so ausgebildet sind, dass sie den Mitnahmegabelstapler (2) an einem mit dem Laderaum versehenen Lastkraftwagen befestigen;
- einen Satz von Gabeln (14) zum Aufnehmen und/oder Absetzen einer Ladung während des Be- und/oder Entladens;
- eine Anzahl von Vorderrädern (6, 8) die an der Vorderseite des Rahmens (4) angeordnet sind;
- mindestens ein Hinterrad (10) das an oder nahe der Rückseite des Rahmens (4) angeordnet ist;
- einen Lenkmechanismus (18) zum Lenken zumindest einiger der Räder (6, 8, 10), wobei der Lenkmechanismus (18) ein Hydrauliksystem (46) aufweist,
wobei das Hydrauliksystem (32) einen Ausrichtungsmechanismus zum Umschalten zwischen einem Vorwärtszustand mit einer Vorwärtsradausrichtung für eine Vorwärtsfahrtrichtung (A) und einem Seitwärtszustand mit einer seitlichen Radausrichtung für eine Seitenfahrtrichtung (B) aufweist,
**dadurch gekennzeichnet, dass** das Hydrauliksystem (32) ferner ein Korrektursystem (52) zum Ausrichten der Vorderräder (6, 8) und/oder des mindestens einen Hinterrades (10) aufweist,
wobei das Korrektursystem (52) einen Radanschlag (58) aufweist.

2. Mitnahmegabelstapler (2) nach Anspruch 1, wobei das Hydrauliksystem (32) einen Schalter zum Aktivieren der Steuerung der Radausrichtung der Vorderräder (6, 8) und/oder des oder der Hinterräder (10) aufweist.

3. Mitnahmegabelstapler (2) nach Anspruch 1 oder 2, wobei das Korrektursystem (52) ein Korrektur-Überdruckventil aufweist.

4. Mitnahmegabelstapler (2) nach einem der vorherigen Ansprüche, ferner aufweisend einen Lenkmechanismus (18), der so ausgebildet ist, dass er mindestens eines der Räder (6, 8, 10) des Mitnahmegabelstaplers (2) lenkt, wobei der Lenkmechanismus (46) aufweist:
- einen Lenkzylinder (24), der so ausgebildet ist, dass er das gelenkte Rad in eine gewünschte Richtung dreht, um den Mitnahmegabelstapler (2) in die gewünschte Richtung zu lenken; und
- eine Radaufhängung, die so ausgebildet ist, dass sie im Zusammenwirken mit dem Lenkzylinder (24) das gelenkte Rad um einen Lenkwinkel um eine im Wesentlichen vertikale Achse dreht,
wobei der Lenkzylinder (24) einen Drehzylinder darstellt.

5. Mitnahmegabelstapler (2) nach einem der vorherigen Ansprüche, der ferner einen oder mehrere Lastträger aufweist, die so ausgebildet sind, dass sie während der Bewegung des Mitnahmegabelstaplers (2) in einer seitlichen Richtung (B) Ladung aufnehmen können, und der mit einem Kippmechanismus versehen ist zum Bewegen des Lastträgers nach unten und mit einem Entfaltungsmechanismus zum gleichzeitigen Entfalten einer Stütze.

6. Lastkraftwagen mit einem Laderaum und einem Mitnahmegabelstapler (2) nach einem der vorherigen Ansprüche und ferner mit Kupplungselementen, die so ausgebildet sind, dass sie den Mitnahmegabelstapler (2) im Zusammenwirken mit den Befestigungselementen des Mitnahmegabelstaplers an den Lastkraftwagen koppeln.

7. Verfahren zum Be- und/oder Entladen eines Laderaums eines Lastkraftwagens, aufweisend die folgenden Schritte:
- Bereitstellen eines Lastkraftwagens und eines Mitnahmegabelstaplers (2) nach einem der vorherigen Ansprüche;
- Abkoppeln des Mitnahmegabelstaplers (2) vom Lastkraftwagen;
- Be- und/oder Entladen des Lastkraftwagens mit dem Mitnahmegabelstapler (2); und
- Ankoppeln des Mitnahmegabelstaplers (2) an den Lastkraftwagen.

8. Verfahren nach Anspruch 7, das ferner das Umschalten der Radausrichtung mit dem Ausrichtungsmechanismus aufweist.

9. Verfahren nach Anspruch 7 oder 8, das ferner den Schritt des Korrigierens der Radposition eines oder mehrerer Räder des Mitnahmegabelstaplers (2) mit dem Korrektursystem (52) aufweist.

## Revendications

1. Chariot élévateur monté sur camion (2) destiné à charger et/ou à décharger un espace de chargement, le chariot élévateur monté sur camion (2) comprenant :
un châssis (4) comportant des éléments de montage configurés afin d'assurer le montage du chariot élévateur monté sur camion (2) sur un camion comportant un espace de chargement ;
un jeu de fourches (14) destinées à récupérer et/ou à déposer une cargaison au cours du chargement et/ou du déchargement ;
un certain nombre de roues avant (6, 8) agencées sur le côté avant du châssis (4) ;
au moins une roue arrière (10) agencée sur le côté arrière du châssis (4) ou à proximité de celui-ci ;
un mécanisme de direction (18) destiné à diriger au moins certaines des roues (6, 8, 10), dans lequel le mécanisme de direction (18) comprend un circuit hydraulique (46),
dans lequel le circuit hydraulique (32) comprend un mécanisme d'orientation destiné à commuter entre un état vers l'avant avec une orientation de roue vers l'avant afin d'assurer une direction de déplacement vers l'avant (A) et un état latéral avec une orientation de roue latérale afin d'assurer une direction de déplacement latérale (B),
**caractérisé en ce que** le circuit hydraulique (32) comprend, en outre, un dispositif de correction (52) destiné à aligner les roues avant (6, 8) et/ou la au moins une roue arrière (10), dans lequel le dispositif de correction (52) comprend une butée de roue (58).

2. Chariot élévateur monté sur camion (2) selon la revendication 1, dans lequel le circuit hydraulique (32) comprend un commutateur destiné à activer la commande d'orientation de roue des roues avant (6, 8) et/ou de la ou des roues arrière (10).

3. Chariot élévateur monté sur camion (2) selon la revendication 1 ou 2, dans lequel le dispositif de correction (52) comprend une vanne de correction à limitation de pression.

4. Chariot élévateur monté sur camion (2) selon l'une quelconque des revendications précédentes, comprenant, en outre, un mécanisme de direction (18) configuré de manière à orienter au moins l'une des roues (6, 8, 10) du chariot élévateur monté sur camion (2), dans lequel le dispositif de direction (46) comporte :
un vérin de direction (24) configuré de manière à faire tourner la roue directrice dans une direction désirée afin de diriger le chariot élévateur monté sur camion (2) dans la direction désirée ;
et une suspension de roue configurée de manière à faire tourner la roue directrice sur un angle de direction autour d'un axe sensiblement vertical en coopérant avec le vérin de direction (24),
dans lequel le vérin de direction (24) comprend un vérin rotatif.

5. Chariot élévateur monté sur camion (2) selon l'une quelconque des revendications précédentes, comprenant, en outre, un ou plusieurs supports de charge configurés afin de transporter la cargaison pendant le déplacement du chariot élévateur monté sur camion (2) dans une direction latérale (B), et comportant un mécanisme de basculement afin de déplacer le support de charge vers le bas et un mécanisme de déploiement afin de déplier simultanément un support.

6. Camion comprenant un espace de chargement et un chariot élévateur monté sur camion (2) selon l'une quelconque des revendications précédentes, et comportant, en outre, des éléments de couplage configurés afin de coupler le chariot élévateur monté sur camion (2) au camion en coopérant avec les éléments de montage du chariot élévateur monté sur camion.

7. Procédé de chargement et/ou de déchargement d'un espace de chargement d'un camion, comprenant les étapes de :
préparation d'un camion et d'un chariot élévateur monté sur camion (2) selon l'une quelconque des revendications précédentes ;
découplage du chariot élévateur monté sur camion (2) par rapport au camion ;
chargement et/ou déchargement du camion avec le chariot élévateur monté sur camion (2) ; et
couplage du chariot élévateur monté sur camion (2) au camion.

8. Procédé selon la revendication 7, comprenant, en outre, la commutation de l'orientation de roue avec le mécanisme d'orientation.

9. Procédé selon la revendication 7 ou 8, comprenant, en outre, l'étape de correction de la position de roue d'une ou plusieurs des roues du chariot élévateur monté sur camion (2) avec le dispositif de correction (52).
